# EUROPÄISCHE PATENTSCHRIFT

(11) **EP 1 900 554 B1**
(45) Veröffentlichungstag und Bekanntmachung des Hinweises auf die Patenterteilung: **02.11.2011**
(21) Anmeldenummer: 07017369.5
(22) Anmeldetag: 05.09.2007
(51) Int. Cl.: B60G 3/20, B60G 7/02, B62D 21/02, B62D 21/11, B62D 21/15

(54) **Einzelradaufhängung vom Doppelquerlenker-Typ**
Individual wheel suspension of a double wishbone type
Suspension de roue unique de type à bras transversaux superposés

(30) Priorität: 15.09.2006 DE 102006044151
(43) Veröffentlichungstag der Anmeldung: 19.03.2008
(73) Patentinhaber: ThyssenKrupp Automotive Systems GmbH, 45145 Essen (DE)
(72) Erfinder: Schmitt, Michael, 33829 Borgholzhausen (DE); Kreisig, Ralf, 33729 Bielefeld (DE); Wennekamp, Fabian, 44787 Bochum (DE); Zhao, Jihua, 47443 Moers (DE); Ziesing, Dirk, 44892 Bochum (DE)
(74) Vertreter: Adams, Steffen

(56) Entgegenhaltungen:
- WO-A-98/17486
- WO-A-2005/091699
- DE-A1- 3 904 723
- DE-A1- 10 023 112
- DE-A1- 10 321 573
- DE-A1- 19 703 951
- DE-A1- 19 809 209
- DE-A1- 19 847 356
- DE-A1-102004 038 487
- DE-U1- 20 022 516
- JP-A- 9 099 867
- JP-A- 2001 310 756
- JP-A- 2003 160 060
- JP-A- 2004 268 680
- US-A- 5 149 132
- US-A- 5 536 035
- US-A- 6 149 197
- US-A1- 2003 184 124
- US-A1- 2005 134 015

## Beschreibung

Die Erfindung betrifft eine Einzelradaufhängung, bei der die Radführung auf dem Konzept der Doppelquerlenkerachse beruht. Bei Einzelradaufhängungen dieses Typs ist das Radträgerelement über einen oberen und einen unteren Querlenker mit dem Fahrzeugrahmen verbunden. Die oberen und unteren Querlenker sind einerseits schwenkbar am Fahrzeugrahmen befestigt und andererseits gelenkig mit dem Radträger verbunden.

Aus dem Stand der Technik sind unterschiedliche Konstruktionen für Einzelradaufhängungen von lenkbaren Rädern einer Fahrzeugachse bekannt. Aus der EP 1 557 339 A1 ist eine Einzelradaufhängung für die lenkbaren Räder einer Vorderachse eines Nutzfahrzeugs bekannt. Diese weist einen Fahrschemel auf, an dem Teile der Radaufhängung und der Lenkung montiert sind, sowie einen unteren und oberen Dreieckslenker als Querlenker, wobei der untere Querlenker über ein Kugelgelenk mit dem Anschlussteil eines Radträgers und der obere Querlenker mit einem weit ausladenden Teil des Schwenkträgers und ebenfalls mit einem Kugelgelenk verbunden ist. Beide Querlenker sind über elastische Lager mit dem Fahrschemel verbunden, und zwischen dem oberen und unteren Querlenker ist ein Feder-Dämpfer-System angeordnet. Das Feder-Dämpfer-System ist dabei als ein eine Luftfeder aufweisendes Federbein ausgebildet.

Nachteilig bei der aus der EP 1 557 339 A1 bekannten Einzelradaufhängung ist, dass sich die unteren Querlenker an ihrer dem Rad abgewandten Seite sehr weit in Richtung Fahrzeugmittelachse erstrecken. Aus diesem Grund ist der zwischen den unteren Querlenkern vorhandene Bauraum begrenzt.

Aus der DE 100 11 417 A1 ist eine Einzelradaufhängung für die lenkbare Fahrzeugachse eines Fahrzeugs bekannt, welche nach dem Prinzip der Doppelpendelachse konstruiert ist. Diese bekannte Einzelradaufhängung weist Rad führende Schräglenker auf, die die Räder an Radträgern gelenkig lagern und deren Quer- und Längslenkerarme unterhalb einer durch die Radmitten gehenden Horizontalebene liegen, und wobei die Querlenkerarme jeweils länger als die halbe Spurweite sind. Aufgrund der langen Querlenkerarme ist auch bei dieser bekannten Einzelradaufhängung der Bauraum zwischen den Einzelradaufhängungen einer Achse stark eingeschränkt.

Aus der DE 200 22 516 U1 ist eine Einzelradaufhängung bekannt, die vorzugsweise für mittelschwere und schwere Lastkraftwagen geeignet sein soll. Bei dieser Radaufhängung bilden die mit dem Bezugszeichen 1 bezeichneten Fahrzeuglängsträger die wesentlichen Tragelemente der Fahrzeugrahmen-konstruktion. Jeder Radaufhängung ist ein Fahrzeuglängsträger zugeordnet, so dass unter dem Fahrzeugaufbau zwei Fahrzeuglängsträger angeordnet sind, die über mehrere Querträger gitter- oder kastenartig miteinander verbunden sind und den Fahrzeugrahmen bilden. Diese klassische und wohlbekannte Konstruktionsweise eines Fahrzeugrahmens wird auch als Leiterrahmen bezeichnet, da die Querträger wie die Sprossen und die Längsträger wie die Holme einer Leiter aussehen. Zusätzlich zu dem Fahrzeugrahmen ist gemäß DE 200 22 516 U1 ein Hilfsrahmen 2 vorgesehen, an welchem die Radaufhängung befestigt ist. Dieser Hilfsrahmen übernimmt dabei keine eigenständige Tragfunktion für die im Fahrbetrieb und/oder im Crashfall auftretenden hohen Kräfte, sondern er ist gemäß Anspruch 1 am Fahrzeugrahmen, d.h. an den Fahrzeuglängsträgern befestigt. Die hohen, im dynamischen Fahrbetrieb und im Crashfall entstehenden Kräfte werden von den Längsträgern des Fahrzeugrahmens aufgenommen, an die der Hilfsrahmen über die Knotenbleche 14 und Anbindungswinkel 15 angebunden ist. Der Hilfsrahmen selbst dient lediglich zur Befestigung der Federaufnahme, der Querlenker, Längslenker, Stoßdämpfer und Radträger, also zu Befestigung der Radaufhängungselemente. Der Kerngedanke der DE 200 22 516 U1 besteht darin, Radaufhängung und Hilfsrahmen als eigenständiges Modul unabhängig von dem Fahrzeugrahmen herzustellen und dieses Modul dann am Fahrzeugrahmen zu befestigen.

Nachteilig bei der aus der DE 200 22 516 U1 bekannten Konstruktion ist, dass sämtliche Kräfte, die im dynamischen Fahrbetrieb oder im Crashfall auftreten, nur von den Längsträgern des Fahrzeugrahmens aufgenommen werden können. Die Längsträger müssen daher entsprechend stark ausgelegt werden. Auch ist die Steifigkeit dieser Fahrzeugrahmenkonstruktion begrenzt, denn die Lastpfade, d.h. die Kraftflusswege, über die die auf den Fahrzeugrahmen einwirkenden Kräfte abgeleitet werden, verlaufen durch die Längsträger des Fahrzeugrahmens und liegen somit in einer einzigen Horizontalebene.

In der DE 100 23 112 A1 ist eine Fahrzeugkarosserie beschrieben mit als Lastpfad dienenden, im wesentlichen in einer Ebene angeordneten Längsträgern. Zusätzlich zu den Längsträgern ist mindestens ein weiterer Lastpfad vorgesehen, der in einer zur Ebene der Längsträger versetzten Ebene angeordnet ist. Der weitere Lastpfad wird durch einen zusätzlichen Träger gebildet, der bevorzugt oberhalb der Ebene der Längsträger angeordnet ist. Dieser weitere Lastpfad leitet im Falle eines Zusammenstoßes die auftretenden Kräfte in einer weiteren Ebene in die Karosserie ein und trägt dadurch zu einer besseren Gesamtkräfteverteilung in der Karosserie bei.

In der DE 39 04 723 A1 ist eine Stützkonstruktion für die Radaufhängung eines Kraftfahrzeuges beschrieben. Ein Antriebsaggregat ist in einem Motorraum des Kraftfahrzeugs an der Vorderseite des Fahrzeugkörpers so angeordnet, dass der Schwerpunkt des Antriebsaggregates hinter den Radzentren der Vorderräder liegt. Ein Paar von vorderen seitlichen Längsträgern ist vorgesehen, die sich längs der rechten bzw. der linken Seitenwand des Motorraumes in Fahrzeuglängsrichtung erstrecken und von deren Mittelabschnitten aus jeweils ein Rahmen nach unten vorspringt. Jeder Rahmen ist mit einer Abstützung für die vordere Radaufhängung ausgestattet und bildet eine Öffnung zur Durchführung der Antriebswelle für das jeweilige Vorderrad über den seitlichen vorderen Längsträger hinaus. Dadurch wird der Schwerpunkt des Antriebsaggregates hinter die Radzentren der Vorderräder verlagert. Eine besondere Rahmenstruktur mit ersten Längsträgern, die einen Primärrahmen bilden und mit den Rädern einer Achse jeweils zugeordneten zweiten Längsträgern, die miteinander über Querträger zu einem Sekundärrahmen verbunden sind, ist dieser Druckschrift nicht zu entnehmen.

Die DE 200 22 516 U1 beschreibt eine Einzelradaufhängung für eine Fahrzeugachse eines mittelschweren oder schweren Nutzfahrzeugs mit lenkbaren Rädern. Das erfindungsgemäße Konzept, über die ersten und zweiten Längsträger jeweils einen eigenen Lastpfad zu Übertragung von Kräften im Crashfall zur Verfügung zu stellen, ist dieser Druckschrift nicht zu entnehmen.

Die gattungsbildende Druckschrift DE 197 03 951 A1 befasst sich mit einer Vorderteilkonstruktion für eine Fahrzeugkarosserie. Bei dieser Vorderteitkonstruktion weist die Fahrzeugkarosserie einen Hauptrahmen und einen Hilfsrahmen auf. Der Hauptrahmen trägt einen Karosseriekörper. Der Hilfsrahmen ist unterhalb des Hauptrahmens angeordnet und trägt eine Vorderradaufhängung. Der Hilfsrahmen weist ein paar von in Längsrichtung verlaufenden rechten und linken Hilfsseitenrahmen und ein Querteil auf, weiches die Hüfsseitenrahmen verbindet. In der DE 197 03 951 A1 ist die Einzetradaufhängung jedoch nur unvollständig offenbart. Ob ein oberer Querlenker vorhanden und wie dieser angeordnet ist, wird nicht offenbart. Bei einem Frontaufprall wird die Aufprallenergie direkt in die Längsträger des Hauptrahmens eingeleitet, und die Längsträger des Seitenrahmens und des Hilfsseitenrahmens sollen sich plastisch verformen. Eine derartige plastische Verformung hat zur Folge, dass die Längsträger bzw. Hilfslängsträger des Seitenrahmens bzw. Hitfsseitenrahmens nach einem entsprechenden Unfall ausgetauscht werden müssen. Eine derartige Reparatur ist zeitaufwändig und sehr teuer.

Der Erfindung liegt die Aufgabe zugrunde, eine Einzelradaufhängung für eine Fahrzeugachse mit lenkbaren Rädern zu schaffen, bei der ein möglichst großer Bauraum zwischen zwei Einzelradaufhängungen einer Achse zur Verfügung steht, und die zu einer Erhöhung der Steifigkeit der Gesamtstruktur des Fahrzeugrahmens führt. Dabei sollen Aufpralllasten, die im Fall eines Frontaufpralls auf einen vorderen Unterfahrschutz einwirken, derart in die Rahmenstruktur des Fahrzeugs eingeleitet werden, dass eine möglichst ausgewogene Beanspruchung der einen Primärrahmen bildenden ersten Längsträger der Rahmenstruktur erreicht wird.

Diese Aufgabe wird durch eine Einzelradaufhängung mit den Merkmalen des Patentanspruchs 1 gelöst. Vorteilhafte Weiterbilclungen sind in den Unteransprüchen angegeben.

Bei der erfindungsgemäßen Lösung wird durch die geschickte Anordnung der Querlenker erreicht, dass die Länge der Querlenker deutlich reduziert werden kann. Die Querlenker werden direkt an die Längsträger des Fahrzeugrahmens angebunden, so dass der gesamte Bauraum zwischen den Längsträgern des Fahrzeugrahmens nicht durch die Querlenker beeinflusst und eingeschränkt wird.

Dadurch, dass das vordere Ende des Sekundärrahmens die Aufnahme für Deformationselemente bildet, an denen wiederum ein vorderer Unterfahrschutz befestigt ist, wird verhindert, dass Unfallpartner im Falle eines Crashes unter den Fahrzeugaufbau geraten (Partnerschutz). Außerdem wird dadurch vermieden, dass die über den vorderen Unterfahrschutz eingeleiteten Aufpralllasten unmittelbar hinter der Befestigung der Deformationsetemente in den oberen (ersten) Längsträger weitergeleitet werden, sondern es findet eine Kraftaufteilung statt. Die Kraft beim Aufprall wird erfindungsgemäß über mehrere Verbindungen (Anbindungselemente) in den ersten Längsträger eingeleitet. Dies führt zu einer ausgewogenen Beanspruchung der ersten Längsträger, die einen Primärrahmen der Rahmenstruktur des Fahrzeugs bilden.

Erfindungsgemäß wird die direkte Anbindung der Querlenker an die Längsträger des Fahrzeugrahmens dadurch ermöglicht, dass eine besondere Rahmenstruktur für den Fahrzeugrahmen vorgegeben wird. Diese besondere Rahmenstruktur sieht vor, dass jeder Einzelradaufhängung eine Rahmenstruktur zugeordnet ist, die aus einem ersten und einem zweiten Längsträger besteht. Der obere Querlenker der Einzelradaufhängung ist mit dem ersten Längsträger verbunden, während der untere Querlenker mit dem zweiten Längsträger verbunden ist. Weiterhin ist der zweite Längsträger im Wesentlichen parallel und beabstandet zu dem ersten Längsträger angeordnet, und der zweite Längsträger ist über Anbindungselemente mit dem ersten Längsträger fest verbunden.

Durch diese Konstruktion wird es ermöglicht, in Richtung quer zur Fahrzeuglängsachse gesehen, kurz ausgebildete obere und insbesondere auch untere Querlenker zu verwenden. Diese kurzen Querlenker können direkt mit der Rahmenstruktur verbunden werden und ragen nicht über die Längsträger des Fahrzeugrahmens hinaus in Richtung Fahrzeugmitte, so dass sie den Bauraum zwischen den Längsträgern nicht einschränken.

Besonders viel Bauraum zwischen den Längsträgern wird dann erreicht, wenn die beiden einer Einzelradaufhängung zugeordneten Längsträger in einer gemeinsamen, parallel zur Fahrzeuglängsrichtung ausgerichteten Ebene angeordnet sind.

Insbesondere bei schweren Nutzfahrzeugen können über die Querlenker große Kräfte auf die Längsträger einwirken. Daher ist es vorteilhaft, im Anbindungsbereich der Querlenker an dem ersten Längsträger einer Einzelradaufhängung eine Querschnittsvergrößerung vorzusehen. Diese Querschnittsvergrößerung bewirkt eine Erhöhung des Widerstandsmomentes des Längsträgers gegen Biegung und Torsion. Vorteilhaft kann die Querschnittsvergrößerung durch eine in Richtung Fahrzeugaufbau weisende Ausformung des ersten Längsträgers realisiert sein. Ist der erste Längsträger als C-Profil ausgebildet, so weist er einen oberen und einen unteren Gurt und einen diese Gurte verbindenden Steg auf. In diesem Fall kann zur Realisierung der Querschnittsvergrößerung der Steg des ersten Längsträgers im Anbindungsbereich der Querlenker vergrößert ausgebildet sein. In diesem Fall ist es besonders wirtschaftlich, die Vergrößerung des Steges im Anbindungsbereich der Querlenker bei der Herstellung des Längsträgers umformtechnisch zu erzeugen.

Eine besonders steife Konstruktion erreicht man, wenn man die den Rädern einer Achse jeweils zugeordneten zweiten Längsträger miteinander durch Querträger zu einem Rahmen verbindet. Auch die ersten Längsträger, die den Rädern einer Achse jeweils zugeordnet sind, können zur Erhöhung der Steifigkeit der Konstruktion miteinander durch ein oder mehrere Querrohre verbunden werden.

Besonders vorteilhaft ist es, wenn zur Aufnahme der Anschlusselemente des oberen Querlenkers Aufnahmekonsolen an dem ersten Längsträger befestigt werden. Diese Aufnahmekonsolen können z. B. in den offenen Hohlraum eines C-förmigen Profils zwischen dessen Gurte eingebracht und mit dem Längsträger verbunden werden. Im Steg des Längsträgers sind dann Ausnehmungen vorhanden, durch welche die Anschlusselemente des oberen Querlenkers hindurchführbar sind, so dass die Anschlusselemente des oberen Querlenkers mit den Aufnahmekonsolen verbunden werden können. Auf diese Weise wird der Anbindungspunkt der oberen Querlenker in Richtung Fahrzeugmitte hin verlagert, so dass die oberen Querlenker größer ausgebildet werden können, als dies der Fall wäre, wenn sie unmittelbar über ihre Anschlusselemente mit dem Steg des Längsträgers verbunden werden würden. Gleichzeitig ragen die Anschlusselemente des oberen Querlenkers nicht in Richtung Fahrzeugmitte über die Ebene hinaus, in der sich der erste Längsträger befindet.

Bei der erfindungsgemäßen Lösung sind die Anschlusselemente des unteren Querlenkers der Einzelradaufhängung mit dem zweiten Längsträger verbunden, welcher parallel und beabstandet zum ersten Längsträger angeordnet ist. Bevorzugt sind die beiden einer Einzelradaufhängung zugeordneten Längsträger in einer gemeinsamen, parallel zur Fahrzeuglängsrichtung ausgerichteten Ebene angeordnet. In diesem Fall dringen die Anschlusselemente des unteren Querlenkers nicht in den zwischen den Längsträgern vorhandenen Bauraum ein, und somit schränken die unteren Querlenker den Bauraum zwischen den Längsträgern nicht ein.

Im Folgenden wird die Erfindung anhand einer ein Ausführungsbeispiel darstellenden Zeichnung näher erläutert. Im Einzelnen zeigen
- Figur 1: eine erfindungsgemäße Einzelradaufhängung in perspektivischer Ansicht, bei der die ersten und zweiten Längsträger aus Gründen der besseren Übersichtlichkeit der Zeichnung nicht dargestellt sind;
- Figur 2: eine Draufsicht auf zwei erfindungsgemäße Einzelradaufhängungen einer Achse, wobei ebenfalls die ersten und zweiten Längsträger aus Gründen der besseren Übersichtlichkeit fortgelassen wurden;
- Figur 3: eine perspektivische Ansicht zweier erfindungsgemäßer Einzelradaufhängungen einer Achse inklusive der ersten und zweiten Längsträger, an denen die Einzelradaufhängungen befestigt sind;
- Figur 4: eine Achse mit zwei erfindungsgemäßen Einzelradaufhängungen und den zugehörigen ersten und zweiten Längsträgern in der Draufsicht.

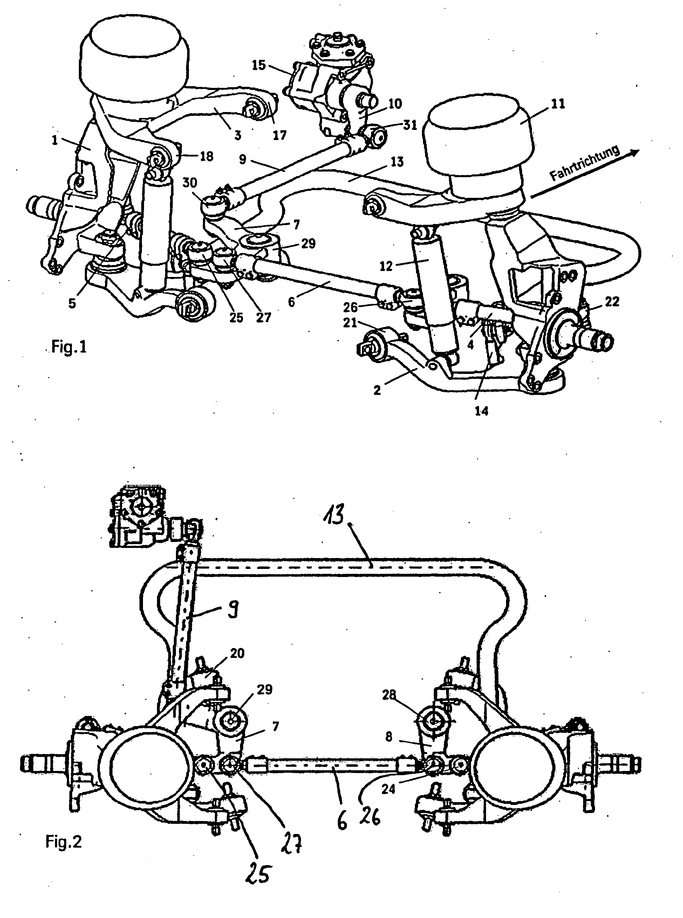

In Figur 1 ist unter Fortlassung der ersten und zweiten Längsträger, an denen der obere Querlenker 3 und der untere Querlenker 2 angebunden sind, eine Fahrzeugachse mit zwei erfindungsgemäßen Einzelradaufhängungen dargestellt. Eine erfindungsgemäße Einzelradaufhängung weist einen Radträger 1 auf, der als Achsschenkel ausgebildet ist. Der Radträger 1 trägt ein Befestigungselement, an dem das nicht dargestellte Fahrzeugrad befestigt werden kann.

Mit dem Radträger 1 sind ein oberer Querlenker 3 und ein unterer Querlenker 2 über Kugelgelenke gelenkig verbunden. Auf dem oberen Querlenker 3 ist eine Feder 11 angeordnet. Im eingebauten Zustand ist die Feder 11 zwischen dem in Figur 1 nicht dargestellten Fahrzeugaufbau und dem oberen Querlenker 3 wirksam. Mit ihrem dem Fahrzeugaufbau abgewandten Ende stützt sich die Feder 11 auf den oberen Querlenker 3.

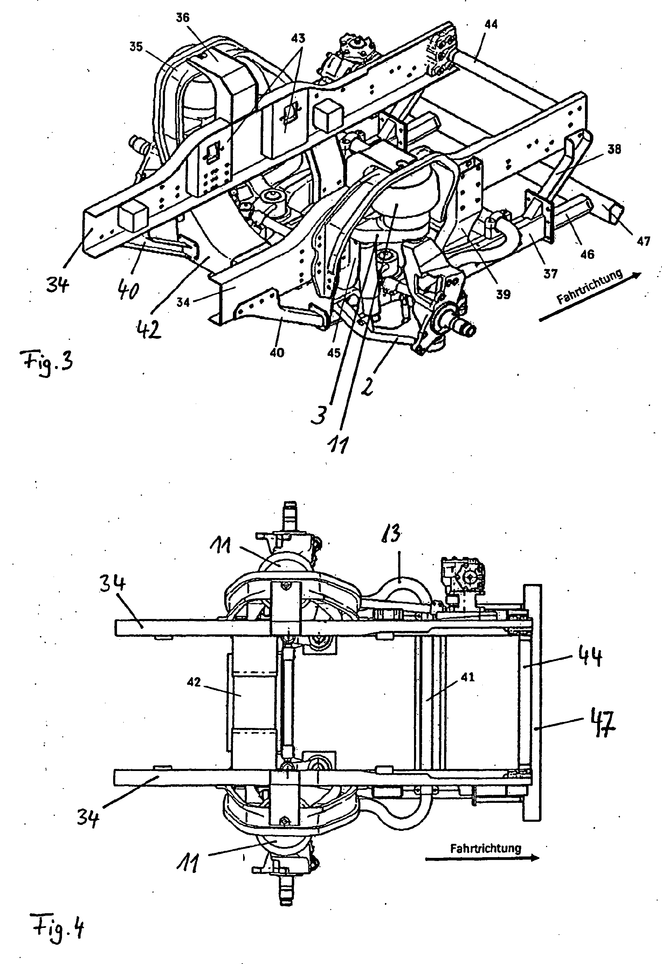

Auf dem unteren Querlenker 2 stützt sich ein Schwingungsdämpfer 12 ab. Der Schwingungsdämpfer 12 ist mit seinem dem unteren Querlenker 2 abgewandten Ende an einem Befestigungselement mit dem in Figur 1 nicht dargestellten Fahrzeugrahmen verbunden. Die Anbindung des Schwingungsdämpfers 12 mit seinem dem unteren Querlenker 2 abgewandten Ende an einer Befestigungskonsole 45, die mit dem ersten Längsträger 34 verbunden ist, ist in Figur 3 dargestellt.

Die beiden Einzelradaufhängungen sind über einen Stabilisator 13, der zur Wankstabilisierung dient, miteinander gekoppelt.

Weiterhin ist in Figur 1 das Lenkgetriebe 15 dargestellt. Den Ausgang des Lenkgetriebes 15 stellt eine quer zur Fahrtrichtung liegende Ausgangswelle dar, welche fest mit dem Lenkstockhebel 10 verbunden ist. Dieser Lenkstockhebel 10 wirkt über ein Kugelgelenk 31 auf die Lenkstange 9. Die Länge des Lenkstockhebels 10 variiert je nach Fahrzeugmodell, so dass stets ein optimales Verhältnis zwischen Kraft und Weg im Lenkgestänge eingestellt werden kann. Das Lenkgestänge umfasst dabei die Komponenten Lenkstockhebel 10, Lenkstange 9 und Spurstangenelemente 4, 5, 6, 7, 8. Die Radführung basiert auf dem Konzept einer Doppelquerlenkerachse. Im dargestellten Ausführungsbeispiel übernimmt eine Luftfeder 11 die Funktion der Aufbaufeder, welche an dem oberen Querlenker 3 positioniert ist. Alternativ denkbar ist der Einsatz einer Stahlschraubenfeder anstelle der Luftfeder 11. Der untere Querlenker 2 und der obere Querlenker 3 sind durch Kugelgelenke mit dem Achsschenkel 1 verbunden. Der Achsschenkel 1 nimmt sowohl das Radlager als auch den Bremssattel auf. Die Spurstange 4 ist an dem am Achsschenkel 1 befindlichen Spurhebel mittels eines Kugelgelenkes 22 angeschlossen.

In der in Figur 2 dargestellten Draufsicht sind die sich auf dem oberen Querlenker 3 abstützenden Luftfedern 11 gut zu erkennen. Es ist dargestellt, dass die Lenkstange 9 über einen Umlenkhebel 7 mit den Spurstangen 5, 6 mechanisch gekoppelt ist. Die mechanische Kopplung erfolgt über Anbindungselemente 25, 27. In gleicher Weise ist auf der anderen Seite ein Führungshebel 8 vorgesehen, der über Anbindungselemente 24, 26 mit den Spurstangen 6 und 4 mechanisch gekoppelt ist. Der Führungshebel 8 ist über das Führungshebellager 28 gelagert, und der Umlenkhebel 7 ist über das Umlenkhebellager 29 gelagert.

In Figur 3 sind die Einzelradaufhängungen der Räder einer Achse zusammen mit den die oberen und unteren Querlenker 2, 3 tragenden ersten und zweiten Längsträgern 34, 37 dargestellt. Die ersten Längsträger 34 sind miteinander über ein Querrohr 44 verbunden, wodurch die Steifigkeit der Rahmenkonstruktion erhöht wird. An dem ersten Längsträger 34 einer Einzelradaufhängung sind Aufnahmekonsolen 34 angeordnet, welche die Anschlusselemente 17, 18 des oberen Querlenkers 3 aufnehmen. Damit die Anschlusselemente 17, 18 mit den Aufnahmekonsolen 34 verbunden werden können, ist im Steg des ersten Längsträgers 34 für jedes Aufnahmeelement 17, 18 eine Ausnehmung vorgesehen, durch die die Aufnahmeelemente 17, 18 jeweils hindurchgreifen. Auf diese Weise kann der obere Querlenker 3 mit längeren Schenkeln ausgebildet werden als dies der Fall wäre, wenn der Querlenker nicht in Aufnahmekonsolen, sondern direkt und unmittelbar mit dem Steg des ersten Längsträgers 34 verbunden werden würde.

An der in Fahrtrichtung rechts angeordneten Einzelradaufhängung ist der zweite Längsträger 37 gut zu erkennen. Er ist mit Anbindungselementen 38, 39, 40 fest mit dem ersten Längsträger 34 verbunden. Die Anbindungselemente 38, 39, 40 können als Blechpressteile in Form von offenen Profilen oder als aus Blechpressteilen gebildete Hohlprofile ausgebildet sein. An der in Fahrtrichtung gesehen rechts angeordneten Einzelradaufhängung ist gut zu erkennen, dass der untere Querlenker 2 an dem zweiten Längsträger 37 angebunden ist, während der obere Querlenker 3 an dem ersten Längsträger 34 angebunden ist. An dem ersten Längsträger 34 sind außerdem Konsolen 35 und 45 befestigt. Die Konsole 35 ist als bogenförmiges Aufnahmeelement ausgebildet und dient der Abstützung der Luftfeder 11 gegenüber dem Fahrzeugaufbau. Sollen besonders große Kräfte aufgenommen werden, so kann zusätzlich zu der Konsole 35 noch ein Verstärkungselement 36 an dem ersten Längsträger 34 befestigt werden. Dies ist in. Figur 3 dargestellt. Das Verstärkungselement 36 dient der zusätzlichen Abstützung der Luftfeder 11 gegenüber dem Fahrzeugaufbau.

In Fahrtrichtung gesehen vor dem zweiten Längsträger 37 ist ein Deformationselement 46 angeordnet. Dieses Deformationselement 46 kann auch als Crashelement bezeichnet werden und dient in erster Linie der Energieabsorbtion im Falle eines Crashs. Das Deformationselement 46 trägt einen Unterfahrschutz 47, der verhindern soll, dass Unfallpartner im Falle eines Crashs unter den Fahrzeugaufbau geraten (Partnerschutz).

Die Konsole 45, die mit dem ersten Längsträger 34 verbunden ist, dient der Abstützung des Schwingungsdämpfers 12 gegenüber dem Fahrzeugaufbau. Der Schwingungsdämpfer 12 ist mit dem unteren Querlenker 2 verbunden und stützt sich gegenüber dem Fahrzeugaufbau über die Konsole 45 direkt am ersten Längsträger 34 ab.

Durch die parallele Anordnung des ersten Längsträgers 34 und des zweiten Längsträgers 37 wird ein zweiter Lastpfad in der Rahmenstruktur des Fahrzeugs zur Verfügung gestellt. Der Fahrzeugrahmen umfasst somit zwei zweite Längsträger 37, die jeweils aus zwei Halbschalen zusammengefügt sind. Die Verbindung zu den jeweiligen ersten Längsträgern 34 erfolgt über vordere, mittlere und hintere Anbindungselemente 38, 39, 40 sowie über den hinteren Querträger 42. Ein weiteres Verbindungselement wird durch den vorderen Querträger 41 gebildet (vgl. Figur 4). Diese Konstruktion kann man als Doppelrahmenkonstruktion bezeichnen. Die ersten Längsträger 34 bilden einen Primärrahmen, während die zweiten Längsträger einen Sekundärrahmen bilden. Der Sekundärrahmen beinhaltet die Aufnahmen für die Aufnahmeelemente der unteren Querlenker 2, des Stabilisators 13 und der Lager 28, 29 für den Umlenkhebel 7 und den Führungshebel 8 der Spurstangen 4, 5, 6.

Das Zusammenwirken des primären Fahrzeugrahmens und des sekundären Rahmens führt zu einer Steigerung der Steifigkeitsraten der Gesamtstruktur. Weiterhin bildet - wie bereits ausgeführt - das vordere Ende des Sekundärrahmens die Aufnahme für die Deformationselemente 46, an denen wiederum der vordere Unterfahrschutz 47 befestigt ist. Gegenüber herkömmlichen Nutzfahrzeugkonstruktionen werden die über den vorderen Unterfahrschutz 47 eingeleiteten Aufpralllasten nicht unmittelbar hinter der Befestigung der Deformationselemente 46 in den oberen (ersten) Längsträger 34 weitergeleitet, sondern es findet eine Kraftaufteilung statt. Die Kraft beim Aufprall wird über mehrere Verbindungen (Anbindungselemente 38, 39, 40) in den ersten Längsträger eingeleitet. Dies führt zu einer ausgewogenen Beanspruchung der ersten Längsträger 34.

Ein besonderer Vorteil der erfindungsgemäßen Einzelradaufhängung besteht darin, dass sie sich herstellerunabhängig mit den bei Nutzfahrzeugen allgemein bekannten Leiterrahmen kombinieren lässt.

Bei der erfindungsgemäßen Einzelradaufhängung können durch die separate Anordnung der Feder 11 und des Schwingungsdämpfers 12 die durch diese Elemente aufzunehmenden Kräfte über zwei unterschiedliche Lastpfade in die Rahmenstruktur eingeleitet werden. Endanschläge lassen sich sowohl in der Luftfeder 11 als auch am Schwingungsdämpfer 12 platzieren und können individuell so abgestimmt werden, dass sich eine optimale Aufteilung der Stoßkräfte ergibt.

In Figur 4 ist die Darstellung gemäß Figur 3 in der Draufsicht dargstellt. Zu erkennen sind der in Fahrtrichtung gesehen vordere Querträger 41 und der hintere Querträger 42, welche die zweiten Längsträger 37 miteinander zu einem Rahmen verbinden. In Verbindung mit der Darstellung in Figur 3 ist gut zu erkennen, dass zwischen den ersten Längsträgern 34 ein maximaler Bauraum zur Verfügung steht. Hier können Motorkomponenten oder andere Bauteile integriert werden.

Bei bekannten Achskonzepten, welche auf der Verwendung von Achsschenkelträgern und/oder Federbeinen basieren, besteht keine Möglichkeit zur Integration einer Antriebswelle für einen Vorderradantrieb. Dagegen bietet das vorliegende Konzept der erfindungsgemäßen Einzelradaufhängung den für die Integration einer Antriebswelle notwendigen Freiraum. Dieser notwendige Freiraum wird im Wesentlichen durch die Positionierung der Luftfeder 11 auf dem oberen Querlenker 3 sowie den seitlich am unteren Querlenker 2 angebrachten Stoßdämpfer 12 erreicht.

## Patentansprüche

1. Einzelradaufhängung für eine Fahrzeugachse eines Nutzfahrzeugs mit lenkbaren Rädern, umfassend
a) einen Radträger (1),
b) einen unteren (2) und einen oberen Querlenker (3), wobei jeder Querlenker (2, 3) über ein Gelenk mit dem Radträger (1) verbunden ist,
c) einen Schwingungsdämpfer (12) zur Dämpfung von Schwingungen des Rades gegenüber dem Fahrzeugaufbau,
d) eine Feder (11) zur Abfederung von Relativbewegungen zwischen dem Fahrzeugaufbau und den Rad führenden Bauteilen der Einzelradaufhängung,
e) eine besondere Rahmenstruktur, bei der jeder Einzelradaufhängung einer Fahrzeugachse ein erster (34) und ein zweiter Längsträger (37) zugeordnet ist,
f) wobei der untere Querlenker (2) über Ansf"hlusselemente (20, 21) schwenkbar mit einem zweiten Längsträger (37) des Fahrzeugs verbunden ist,
g) wobei der zweite Längsträger (37) im Wesentlichen parallel und beabstandet zu dem ersten Längsträger (34) angeordnet und
h) über Anbindungselemente (38, 39, 40) mit dem ersten Längsträger (34) derart fest verbunden ist, dass
i) jeder Längsträger (34, 37) einen eigenen Lastpfad zur Übertragung von Kräften bildet,
j) wobei die ersten Längsträger (34) einen Primärrahmen bilden und die den Rädern einer Achse jeweils zugeordneten zweiten Längsträger (37) miteinander durch Querträger (41, 42) zu einem Sekundärrahmen verbunden sind, **dadurch gekennzeichnet, dass**
k) der obere Querlenker (3) über Anschiussetemente (17, 18) schwenkbar mit einem ersten Längsträger (34) des Fahrzeugs verbunden ist,
l) und das vordere Ende des Sekundärrahmens (37, 41, 42) die Aufnahme für Deformationselemente (46) bildet, an denen wiederum ein vorderer Unterfahrschutz (47) befestigt ist.

2. Einzelradaufhängung nach Anspruch 1, **dadurch gekennzeichnet, dass** die beiden Längsträger (34, 37) in einer gemeinsamen, parallel zur Fahrzeuglängsrichtung ausgerichteten Ebene angeordnet sind.

3. Einzelradaufhängung nach Anspruch 1 oder 2, **dadurch gekennzeichnet, dass** die Feder (11) wirkungsmäßig zwischen dem Fahrzeugaufbau und dem oberen Querlenker (3) angeordnet ist.

4. Einzelradaufhängung nach einem der vorhergehenden Ansprüche, **dadurch gekennzeichnet, dass** der Schwingungsdämpfer (12) sich mit einem Ende am Fahrzeugaufbau abstützt und mit dem anderen Ende mit dem unteren Querlenker (2) gelenkig verbunden ist.

5. Einzelradaufhängung nach Anspruch 4, **dadurch gekennzeichnet, dass** sich der Schwingungsdämpfer (12) fahrzeugaufbauseitig über ein Halteelement (45) direkt am ersten Längsträger (34) abstützt.

6. Einzelradaufhängung nach einem der vorhergehenden Ansprüche, **dadurch gekennzeichnet, dass** der Radträger (1) als Achsschenkel ausgebildet ist, wobei die Querlenker (2, 3) über Kugelgelenke mit dem Achsschenkel verbunden sind.

7. Einzelradaufhängung nach einem der vorhergehenden Ansprüche, **dadurch gekennzeichnet, dass** die Anschlusselemente (17, 18, 20, 21) zur Anbindung der Querlenker (2, 3) an die Längsträger (34,37) als Molekulargelenke ausgebildet sind.

8. Einzelradaufhängung nach einem der vorhergehenden Ansprüche, **dadurch gekennzeichnet, dass** Feder (11) und Dämpfer (112) getrennt voneinander angeordnet sind.

9. Einzelradaufhängung nach einem der vorhergehenden Ansprüche, **dadurch gekennzeichnet, dass** der erste Längsträger (34) als C-Profil ausgebildet ist.

10. Einzelradaufhängung nach einem der vorhergehenden Ansprüche, **dadurch gekennzeichnet, dass** der erste Längsträger (34) im Anbindungsbereich der Querlenker (2, 3) eine Querschnittsvergrößerung aufweist.

11. Einzelradaufhängung nach Anspruch 10, **dadurch gekennzeichnet, dass** die Querschnittsvergrößerung durch eine in Richtung Fahrzeugaufbau weisende Ausformung des ersten Längsträgers (34) realisiert ist.

12. Einzelradaufhängung nach Anspruch 11, **dadurch gekennzeichnet, dass** der als C-Profil ausgebildete erste Längsträger (34) einen oberen und einen unteren Gurt und einen diese Gurte verbindenden Steg aufweist, wobei zur Realisierung der Querschnittsvergrößerung der Steg des ersten Längsträgers (34) im Anbindungsbereich der Querlenker (2, 3) vergrößert ausgebildet ist.

13. Einzelradaufhängung nach Anspruch 12, **dadurch gekennzeichnet, dass** die Vergrößerung des Steges im Anbindungsbereich der Querlenker (2, 3) umformtechnisch hergestellt ist.

14. Einzelradaufhängung nach einem der vorhergehenden Ansprüche, **dadurch gekennzeichnet, dass** der zweite Längsträger (37) aus zwei Blechhalbschalen zusammengefügt ist.

15. Einzelradaufhängung nach einem der vorhergehenden Ansprüche, **dadurch gekennzeichnet, dass** die den Rädern einer Achse jeweils zugeordneten ersten Längsträger (34) miteinander durch mindestens ein Querrohr (44) verbunden sind.

16. Einzelradaufhängung nach einem der vorhergehenden Ansprüche, **dadurch gekennzeichnet, dass** in dem ersten Längsträger (34) an jedem Anbindungspunkt eines oberen Querlenkers (3) Aufnahmekonsolen (43) zur Aufnahme der Anschlusselemente (17, 18) angeordnet sind.

17. Einzelradaufhängung nach Anspruch 16, **dadurch gekennzeichnet, dass** der erste Längsträger (34) im Bereich der Aufnahmekonsolen (43) Ausnehmungen aufweist, durch welche die Anschlusselemente (17, 18) des oberen Querlenkers (3) zu deren Verbindung mit den Aufnahmekonsolen (43) hindurchführbar sind.

18. Einzelradaufhängung nach einem der vorhergehenden Ansprüche, **dadurch gekennzeichnet, dass** an dem ersten Längsträger (34) eine Konsole (35) befestigt sind, die zur Aufnahme und Abstützung der Feder (11) dient.

19. Einzelradaufhängung nach einem der vorhergehenden Ansprüche, **dadurch gekennzeichnet, dass** an dem ersten Längsträger (34) eine Konsole (45) befestigt ist, die zur Aufnahme und Abstützung des Schwingungsdämpfers (12) dient.

## Claims

1. Individual suspension for a motor vehicle axis of a utility vehicle, having steerable wheels, comprising
(a) a wheel carrier (1),
(b) a lower (2) and an upper (3) transverse control arm (3), wherein each transverse control arm (2, 3) is connected to the wheel carrier (1) via a joint,
(c) a vibration absorber (12) for absorbing vibrations of the wheel as opposed to the vehicle body,
(d) a spring (11) for the spring suspension of relative movements between the vehicle body and the components of the individual suspension carrying the wheel,
(e) a special frame structure, wherein a first (34) and a second longitudinal chassis beam (37) is associated with each independent suspension of a motor vehicle axis,
(f) wherein the lower transverse control arm (2) is pivot-connected to a second longitudinal chassis beam (37) of the motor vehicle via connection elements (20, 21),
(g) wherein the second longitudinal chassis beam (37) is disposed essentially parallel and at a distance to the first longitudinal chassis beam (34), and
(h) is firmly connected to the first longitudinal chassis beam (34) via connection elements (38, 39, 40) such that
(i) each longitudinal chassis beam (34, 37) forms a dedicated load curve for transferring forces,
(j) wherein the first longitudinal chassis beams (34) form a primary frame, and the second longitudinal chassis beams (37), each associated with the wheels of an axis, are connected to each other by means of transverse control arms (41, 42) to form a secondary frame, **characterized in that**
(k) the upper transverse control arm (3) is pivot-connected to a first longitudinal chassis beam (34) of the motor vehicle via connection elements (17, 18),
(l) and the front end of the secondary frame (37, 41, 42) forms the receptacle for deformation elements (46), on which, in turn, a front underride protection (47) is attached.

2. Independent suspension according to claim 1, **characterized in that** the two longitudinal chassis beams (34, 37) are disposed in a mutually directed plane, parallel to the vehicle longitudinal direction.

3. Independent suspension according to claims 1 or 2, **characterized in that** the spring (11) is operatively connected between the vehicle body and the upper transverse control arm (3).

4. Independent suspension according to one of the previous claims, **characterized in that** the vibration absorber (12) is supported at one end thereof on the vehicle body, and is articulated at the lower transverse control arm (2) at the other end thereof.

5. Independent suspension according to claim 4, **characterized in that** the vibration absorber (12) is directly supported on the first longitudinal chassis beam (34) on the vehicle body side via a retaining element (45).

6. Independent suspension according to one of the previous claims, **characterized in that** the wheel carrier (1) is embodied as an axle leg, wherein the transverse control arms (2, 3) are connected to the axle leg via ball joints.

7. Independent suspension according to one of the previous claims, **characterized in that** the connection elements (17, 18, 20, 21) are embodied as molecular joints for attaching the transverse control arms (2, 3) to the longitudinal chassis beams (34, 37).

8. Independent suspension according to one of the previous claims, **characterized in that** the spring (11) and the absorber (12) are disposed separately from each other.

9. Independent suspension according to one of the previous claims, **characterized in that** the first longitudinal chassis beam (34) is embodied as a C profile.

10. Independent suspension according to one of the previous claims, **characterized in that** the first longitudinal chassis beam (34) has a cross-section enlargement in the connection region of the transverse control arms (2, 3).

11. Independent suspension according to claim 10, **characterized in that** the cross-section enlargement is realized by means of a molding of the first longitudinal chassis beam (34) directed into the direction of the vehicle body.

12. Independent suspension according to claim 11, **characterized in that** the first longitudinal chassis beam (34) embodied as a C profile has an upper and a lower belt, and a bar connected said belts, wherein the bar of the first longitudinal chassis beam (34) is embodied in an enlarged manner in the connection region of the transverse control arms (2, 3) in order to realize the cross section enlargement.

13. Independent suspension according to claim 12, **characterized in that** the enlargement of the bar is machined in the connection region of the transverse control arms (2, 3).

14. Independent suspension according to one of the previous claims, **characterized in that** the second longitudinal chassis beam (37) is joined together from two sheet metal semi-shells.

15. Independent suspension according to one of the previous claims, **characterized in that** each of the longitudinal chassis beams (34) assigned to the wheels of an axis are connected to each other by means of at least one cross tube (44).

16. Independent suspension according to one of the previous claims, **characterized in that** receiving brackets (43) are disposed in the first longitudinal chassis beam (34) at each connection point of an upper transverse control arm (3) for receiving the connection elements (17, 18).

17. Independent suspension according to claim 16, **characterized in that** the first longitudinal chassis beam (34) has recesses in the region of the receiving brackets (43), by means of which the connection elements (17, 18) of the upper transverse control arm (3) may be passed through for the connection thereof to the receiving brackets (43).

18. Independent suspension according to one of the previous claims, **characterized in that** a bracket (35) is attached to the first longitudinal chassis beam (34) serving for receiving and supporting the spring (11).

19. Independent suspension according to one of the previous claims, **characterized in that** a bracket (45) is attached to the first longitudinal chassis beam (34) serving for receiving and supporting the vibration absorber (12).

## Revendications

1. Suspension à roues indépendantes pour un essieu de véhicule d'un véhicule utilitaire doté de roues dirigeables, comprenant
a) un support de roue (1),
b) un bras oscillant transversal inférieur (2) et un bras oscillant supérieur (3), chaque bras oscillant transversal (2, 3) étant relié par une articulation au support de roue (1),
c) un amortisseur de vibrations (12) pour l'amortissement des vibrations de la roue par rapport à la carrosserie du véhicule,
d) un ressort (11) pour l'amortissement de déplacements relatifs entre la carrosserie du véhicule et des composants guidant la roue de la suspension à roues indépendantes,
e) une structure de cadre particulière, sur laquelle un premier longeron (34) et un second longeron (37) sont attribués à chaque suspension à roues indépendantes d'un essieu de véhicule,
f) le bras oscillant transversal inférieur (2) étant relié par des éléments de raccordement (20, 21) de façon basculante à un second longeron (37) du véhicule,
g) le second longeron (37) étant disposé sensiblement parallèlement et à distance du premier longeron (34) et
h) étant relié fixement par des éléments de rattachement (38, 39, 40) au premier longeron (34) de telle sorte que
i) chaque longeron (34, 37) forme un propre chemin de charge pour la transmission de forces,
j) les premiers longerons (34) formant un cadre primaire et les seconds longerons (37) attribués respectivement aux roues d'un essieu étant reliés les uns aux autres par des traverses (41, 42) pour former un cadre secondaire, **caractérisée en ce que**
k) le bras oscillant transversal (3) supérieur est relié par des éléments de raccordement (17, 18) de façon basculante à un premier longeron (34) du véhicule,
i) et l'extrémité avant du cadre secondaire (37, 41, 42) formant le logement pour des éléments de déformation (46), sur lesquels est fixé à son tour un dispositif antiencastrement avant (47).

2. Suspension à roues indépendantes selon la revendication 1, **caractérisée en ce que** les deux longerons (34, 37) sont disposés dans un plan commun, orienté parallèlement à la direction longitudinale du véhicule.

3. Suspension à roues indépendantes selon la revendication 1 ou 2, **caractérisée en ce que** le ressort (11) est disposé de manière fonctionnelle entre la carrosserie du véhicule et le bras oscillant transversal supérieur (3).

4. Suspension à roues indépendantes selon l'une des revendications précédentes, **caractérisée en ce que** l'amortisseur de vibrations (12) s'appuie par une extrémité sur la carrosserie du véhicule et est relié de façon articulée par l'autre extrémité au bras oscillant transversal inférieur (2).

5. Suspension à roues indépendantes selon la revendication 4, **caractérisée en ce que** l'amortisseur de vibrations (12) s'appuie côté carrosserie du véhicule au moyen d'un élément de retenue (45) directement sur le premier longeron (34).

6. Suspension à roues indépendantes selon l'une des revendications précédentes, **caractérisée en ce que** le support de roue (1) est conçu sous forme de fusée d'essieu, les bras oscillants transversaux (2, 3) étant reliés à la fusée d'essieu au moyen d'articulations sphériques.

7. Suspension à roues indépendantes selon l'une des revendications précédentes, **caractérisée en ce que** les éléments de raccordement (17, 18, 20, 21) sont conçus pour le rattachement des bras oscillants transversaux (2, 3) aux longerons (34, 37) sous forme d'articulations moléculaires.

8. Suspension à roues indépendantes selon l'une des revendications précédentes, **caractérisée en ce que** le ressort (11) et l'amortisseur (12) sont disposés séparément l'un de l'autre.

9. Suspension à roues indépendantes selon l'une des revendications précédentes, **caractérisée en ce que** le premier longeron (34) est conçu sous forme de profilé en C.

10. Suspension à roues indépendantes selon l'une des revendications précédentes, **caractérisée en ce que** le longeron (34) présente un agrandissement de section dans la zone du rattachement des bras oscillants transversaux (2, 3).

11. Suspension à roues indépendantes selon la revendication 10, **caractérisée en ce que** l'agrandissement de section est réalisé par une partie formée, dirigée en direction de la carrosserie du véhicule, du premier longeron (34).

12. Suspension à roues indépendantes selon la revendication 11, **caractérisée en ce que** le premier longeron (34), conçu sous forme de profilé en C, présente une membrure supérieure et une membrure inférieure et une traverse reliant ces membrures, l'entretoise du premier longeron (34) étant conçue agrandie dans la zone de rattachement des bras oscillants transversaux (2, 3) pour la réalisation de l'agrandissement de section.

13. Suspension à roues indépendantes selon la revendication 12, **caractérisée en ce que** l'agrandissement de l'entretoise dans la zone de liaison des bras oscillants transversaux (2, 3) est fabriqué par une technique de déformation.

14. Suspension à roues indépendantes selon l'une des revendications précédentes, **caractérisée en ce que** le second longeron (37) est assemblé à partir de deux demi-coques en tôle.

15. Suspension à roues indépendantes selon l'une des revendications précédentes, **caractérisée en ce que** les premiers longerons (34) respectivement attribués aux roues d'un essieu sont reliés les uns aux autres par au moins un tube transversal (44).

16. Suspension à roues indépendantes selon l'une des revendications précédentes, **caractérisée en ce que** des consoles de logement (43) pour le logement des éléments de raccordement (17, 18) sont disposées dans le premier longeron (34) sur chaque point de rattachement d'un bras oscillant transversal supérieur (3).

17. Suspension à roues indépendantes selon la revendication 16, **caractérisée en ce que** le premier longeron (34) présente dans la zone des consoles de logement (43) des évidements par lesquels les éléments de raccordement (17, 18) du bras oscillant transversal supérieur (3) peuvent passer pour leur liaison avec les consoles de logement (43).

18. Suspension à roues indépendantes selon l'une des revendications précédentes, **caractérisée en ce qu'**une console (35), qui sert au logement et au soutien du ressort (11), est fixée sur le premier longeron (34).

19. Suspension à roues indépendantes selon l'une des revendications précédentes, **caractérisée en ce qu'**une console (45), qui sert au logement et au soutien du bras oscillant (12), est fixée sur le premier longeron (34).
